# EUROPÄISCHE PATENTSCHRIFT

(11) **EP 0 803 852 B1**
(45) Veröffentlichungstag und Bekanntmachung des Hinweises auf die Patenterteilung: **13.03.2002**
(21) Anmeldenummer: 96117827.4
(22) Anmeldetag: 07.11.1996
(51) Int. Cl.: G08G 1/0968

(54) **Verfahren und Einrichtung zur Zielführung eines Fahrzeuges**
Method and device to guide a vehicle
Procédé et appareil de guidage d'un véhicule

(30) Priorität: 23.04.1996 DE 19616071
(43) Veröffentlichungstag der Anmeldung: 29.10.1997
(73) Patentinhaber: Siemens Aktiengesellschaft, 80333 München (DE)
(72) Erfinder: Helmstädter, Gerald, D-64331 Weiterstadt (DE); Schmischke, Kai, D-63543 Neuberg 1 (DE)
(74) Vertreter: Klein, Thomas, Dipl.-Ing. (FH)

(56) Entgegenhaltungen:
- EP-A- 0 583 773
- EP-A- 0 777 206
- US-A- 5 303 159
- US-A- 5 311 434
- US-A- 5 369 588
- US-A- 5 450 343

## Beschreibung

Die Erfindung betrifft ein Verfahren und Einrichtungen zur Zielführung eines Fahrzeuges, wobei mittels einer gespeicherten Straßenkarte eine über Wegleitpunkte führende Route zu einem Ziel ermittelt wird, die als Sollroute dem Führer des Fahrzeuges durch Wegleitinformationen vorgegeben wird.

Die Sollroute wird dabei in Form einer Folge von Wegleitpunkten vom Start bis zum Ziel gespeichert. Die Wegleitpunkte sind im allgemeinen Abzweigungen und Kreuzungen. Weicht beispielsweise der Führer eines Fahrzeugs an einem dieser Wegleitpunkte von den ihm gegebenen Wegleitinformationen ab, so daß er auf eine andere Straße gerät, sind die weiteren auf der Sollroute beruhenden Wegleitinformationen sinnlos bzw. irreführend. Es ist daher bekanntgeworden, beim Abweichen des Fahrzeuges von der Sollroute - im folgenden auch als Falschfahrt bezeichnet-eine Alternativroute zu ermitteln und dem Führer die für die Alternativroute erforderlichen Wegleitinformationen zuzuführen. Die Feststellung, ob sich das Fahrzeug auf der Sollroute befindet, kann beispielsweise durch einen Vergleich der Sollroute mit von einem Ortungssystem (beispielsweise GPS) ermittelten Positionsdaten erfolgen.

Ein solches Verfahren ist aus der US-A-5 303 159 bekannt.

Das Berechnen von Routen, insbesondere in umfangreichen Straßennetzen, ist mit erheblichem Rechenaufwand verbunden und benötigt daher eine nicht unerhebliche Zeit. Bei bekannten Systemen können während dieser Zeit dem Führer eines von der Sollroute abgewichenen Fahrzeugs keine Wegleitinformationen für eine Alternativroute angegeben werden. Weicht das Fahrzeug während dieser Zeit dann mangels Wegleitinformationen von der angenommenen Alternativroute wiederum ab, ist die Berechnung einer weiteren Alternativroute erforderlich, so daß bei kurzen Fahrzeiten zwischen Wegleitpunkten eine Versorgung mit Wegleitinformationen für eine längere Zeit unterbleibt.

Aufgabe der vorliegenden Erfindung ist es, ein Verfahren und Einrichtungen zur Zielführung eines Fahrzeugs anzugeben, bei welchem Wegleitinformationen auch bei Falschfahrten schnell und zuverlässig zur Verfügung stehen.

Diese Aufgabe wird bei dem erfindungsgemäßen Verfahren dadurch gelöst, daß während der Fahrt des Fahrzeuges vorausschauend für Wegleitpunkte zu dem Ziel führende Alternativrouten ermittelt und gespeichert werden, daß geprüft wird, ob das Fahrzeug von der jeweiligen Sollroute abweicht, und daß bei Feststellung einer Abweichung eine der gespeicherten Alternativrouten als neue Sollroute dem Führer durch Wegleitinformationen angezeigt wird.

Das erfindungsgemäße Verfahren hat den Vorteil, daß bei einer erkannten Falschfahrt sofort neue Wegleitinformationen dem Führer angezeigt werden. Dabei können vorausschauend für einen oder mehrere Wegleitpunkte und auch für jeweils einen Wegleitpunkt mehrere Alternativrouten ermittelt und gespeichert werden.

Je nach örtlichen Gegebenheiten und nach Beschaffenheit der einzelnen Straßen ist eine Falschfahrt von Wegleitpunkt zu Wegleitpunkt verschieden wahrscheinlich, wobei die Wahrscheinlichkeit auch vom jeweiligen Weg über den Wegleitpunkt abhängt. So wird beispielsweise das Berechnen einer Alternativroute beim Befahren einer Bundesstraße für einen Wegleitpunkt, der eine Abzweigung eines Feldweges darstellt, kaum erforderlich sein. Um die Berechnung von derart unnötigen Alternativrouten zu vermeiden, ist bei einer Weiterbildung der Erfindung vorgesehen, daß für diejenigen Wegleitpunkte Alternativrouten ermittelt werden, bei welchen aufgrund der jeweiligen örtlichen Gegebenheiten die Wahrscheinlichkeit einer Abweichung von der Sollroute ein vorgegebenes Maß überschreitet. Dabei sind vorzugsweise in der gespeicherten Straßenkarte zu den Wegleitpunkten Angaben zu Fahrtwiderständen beim Passieren des jeweiligen Wegleitpunktes auf verschiedenen Straßen enthalten.

Die Wahrscheinlichkeit einer Falschfahrt kann beispielsweise hoch sein, wenn zum Befahren der Sollroute ein Abbiegen von einer breiten gut ausgebauten Straße in eine schmale Seitenstraße angezeigt wird. Ferner sind bei Kreuzungen, bei denen sich mehr als zwei Straßen oder Straßen nicht im rechten Winkel kreuzen, Falschfahrten besonders leicht möglich. Beim Befahren von derartigen Kreuzungen kann ein Fahrtwiderstand angegeben werden, der eine Aussage darüber enthält, wie "schwierig" es ist, die jeweilige von der Kreuzung abgehende Straße zu befahren.

Eine vorteilhafte Ausgestaltung des erfindungsgemäßen Verfahrens besteht darin, daß ermittelte Alternativrouten für Wegleitpunkte, die ohne Abweichung von der Sollroute passiert werden, gelöscht werden. Dies kann auch durch Überschreiben mit neuen Alternativrouten geschehen. Dadurch wird ein Überlaufen des für die Alternativrouten vorgesehenen Speichers verhindert.

Einrichtungen zur Zielführung können im Fahrzeug selbst angeordnet sein und dort weitgehend autark arbeiten. Es ist jedoch auch möglich, die Routenermittlung in einer zentralen Einrichtung mit Hilfe eines leistungsfähigen Rechners durchzuführen, wozu eine bidirektionale drahtlose Datenübertragung zwischen dem Fahrzeug und der zentralen Einrichtung erforderlich ist. Diesem zusätzlichen Aufwand steht jedoch der Vorteil entgegen, daß die dort gespeicherte Straßenkarte laufend aktualisiert werden kann, was bei den vielen in dem Fahrzeug befindlichen vorzugsweise auf CD-ROMs gespeicherten Straßenkarten nicht möglich ist. In beiden Fällen kann das erfindungsgemäße Verfahren in vorteilhafter Weise angewendet werden.

Bei einer ersten erfindungsgemäßen Einrichtung ist daher vorgesehen, daß die Straßenkarte in einer im Fahrzeug befindlichen Einrichtung gespeichert ist und daß in der im Fahrzeug befindlichen Einrichtung die Routenermittlung erfolgt.

Eine zweite erfindungsgemäße Einrichtung besteht darin, daß die Straßenkarte in einer ortsfesten Einrichtung gespeichert ist, daß in der ortsfesten Einrichtung auch die Routenermittlung erfolgt und daß zwischen dem Fahrzeug und der ortsfesten Einrichtung eine Funkverbindung zur bidirektionalen Datenübertragung besteht.

Die Erfindung läßt zahlreiche Ausführungsformen zu. Eine davon ist schematisch in der Zeichnung anhand mehrerer Figuren dargestellt und nachfolgend beschrieben. Es zeigt:
- Fig. 1: eine schematische Darstellung eines Ausschnitts aus einer Straßenkarte mit mehreren Wegleitpunkten,
- Fig. 2: ein Flußdiagramm zur Erläuterung des erfindungsgemäßen Verfahrens und
- Fig. 3: ein Ausführungsbeispiel einer erfindungsgemäßen Einrichtung.

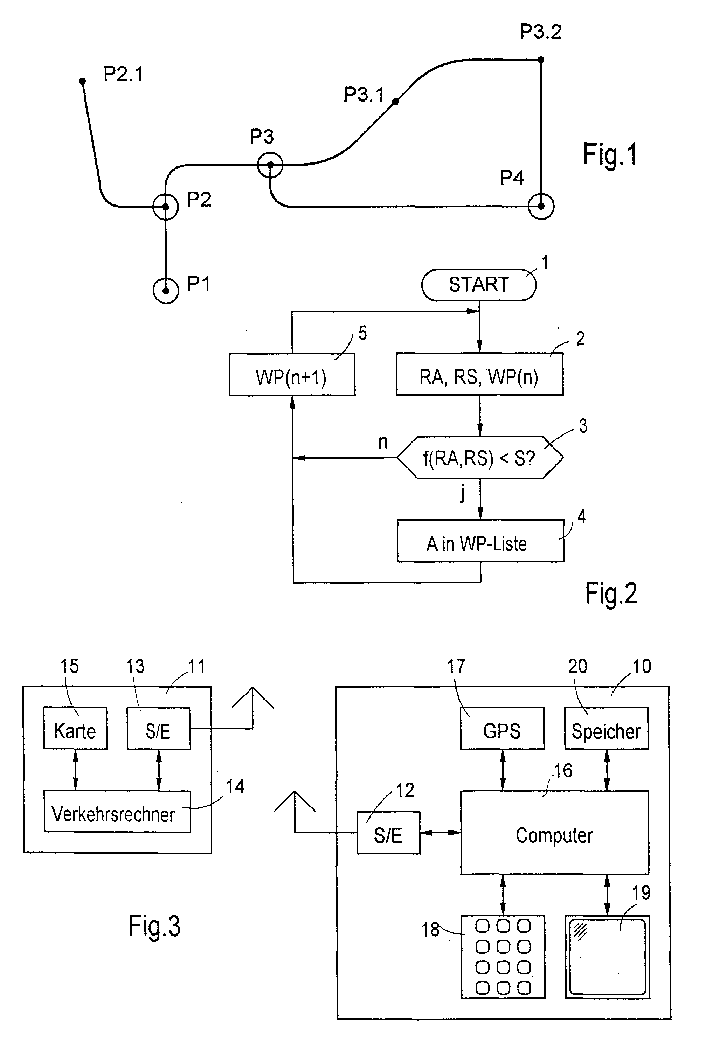

In Fig. 1 stellt P1 den Start einer Fahrt dar, deren Ziel der Wegleitpunkt P4 ist. Dazu wurde zuvor aus einer Vielzahl von im einzelnen nicht dargestellten Möglichkeiten nach einem an sich bekannten Verfahren eine Sollroute ermittelt, die über die Wegleitpunkte P2 und P3 führt. Zur Veranschaulichung dessen, ob eine Falschfahrt mehr oder weniger wahrscheinlich ist, sind die Wegleitpunkte P2 und P3 jeweils als Abzweigungen dargestellt, wobei der Fahrtwiderstand für das Abbiegen jeweils größer angenommen wird.

Sobald die Sollroute mit den in Fig. 1 eingekreisten Wegleitpunkten P1, P2, P3, P4 berechnet ist, kann mit der Ermittlung von Alternativrouten begonnen werden. Der Ablauf dieser Ermittlung ist in Fig. 2 dargestellt. Nach einem Start bei 1 wird bei 2 für den nächsten Wegleitpunkt WP(n) für alle abgehenden Straßen der Fahrtwiderstand aus der Straßenkarte ausgelesen - sowohl der Fahrtwiderstand für alternative Straßen RA als auch der Fahrtwiderstand RS für die auf der Sollroute liegenden Straße.

Bei 3 erfolgt eine Verzweigung in Abhängigkeit davon, ob Straßen mit Fahrtwiderständen RA vorhanden sind, für die eine Funktion von RA und RS kleiner als ein vorgegebener Schwellwert ist. Diese Funktion kann beispielsweise RA - RS sein, so daß dann eine Alternativroute berechnet wird, wenn der Fahrtwiderstand RA nicht um den Schwellwert S größer als der Fahrtwiderstand RS ist. Dieses ist beispielsweise bei dem Wegleitpunkt P2 (Fig. 1), der eine Abzweigung zu einem Wegleitpunkt P2.1 ist, nicht der Fall. Es werden deshalb für P2 auch keine Alternativrouten berechnet.

Im Falle des Wegleitpunktes P3 liegt jedoch ein Fahrtwiderstand RA für die Straße zum Wegleitpunkt P3.1 vor, der kleiner als RS ist. Deshalb wird bei 4 eine Alternativroute A berechnet und in eine Wegleitpunktliste beim Wegleitpunkt P3 eingetragen. Bei 5 wird dann der folgende Wegleitpunkt angenommen, worauf eine Wiederholung des Programms bei 2 mit dem folgenden Wegleitpunkt WP(n+1) durchgeführt wird.

Die bei 4 (Fig. 2) berechnete Alternativroute enthält die Wegleitpunkte P3.1, P3.2 sowie das Ziel P4. Sobald nach Passieren des Wegleitpunktes P3 eine Falschfahrt erkannt wird, wird dem Führer die Wegleitinformation für diese Alternativroute zugeführt. Hält er sich jedoch an die Wegleitinformation zum Befahren des Wegleitpunktes P3, wird die Alternativroute verworfen und die ursprüngliche Sollroute weiterhin angezeigt.

Das als Blockschaltbild in Fig. 3 dargestellte Ausführungsbeispiel einer erfindungsgemäßen Einrichtung besteht aus einer Fahrzeugeinheit 10 und einer zentralen Einrichtung 11, zwischen denen mit jeweils einem Sender/Empfänger 12, 13 eine Funkverbindung besteht, beispielsweise nach dem GSM-Standard. In der zentralen Einrichtung 11 befindet sich ein Verkehrsrechner 14, der Zugriff auf eine gespeicherte Straßenkarte 15 hat und für viele Fahrzeuge die Routenermittlung vornimmt.

Die Fahrzeugeinheit 10 besteht im wesentlichen aus einem Bordcomputer 16, einem GPS-Empfänger 17, einer Eingabeeinrichtung 18, einer Anzeigeeinrichtung 19 und einem Speicher 20. Diese Komponenten sind an sich bekannt und brauchen zum Verständnis der Erfindung nicht näher erläutert zu werden. Der GPS-Empfänger 17 führt dem Bordcomputer 16 ständig Informationen über die geographische Position des Fahrzeugs zu. Mit der Eingabeeinrichtung 18 kann der Führer des Fahrzeugs ein Ziel eingeben. Dieses wird zusammen mit der gegenwärtigen Position dem Verkehrsrechner 14 zugeführt, der anhand der Straßenkarte 15 die Sollroute ermittelt und an die Fahrzeugeinheit 10 in Form einer Wegleitpunktliste überträgt. Zur Durchführung des erfindungsgemäßen Verfahrens berechnet der Verkehrsrechner außerdem zu den einzelnen Wegleitpunkten, wie oben beschrieben, Alternativrouten, die ebenfalls zur Fahrzeugeinheit übertragen werden.

Durch die Positionsmeldungen des GPS-Empfängers 17 wird dem Bordcomputer mitgeteilt, in wieweit Wegleitpunkte auf der Sollroute erreicht werden, so daß die Anzeigeeinrichtung 19 Wegleitinformationen für den jeweils vorausliegenden Wegleitpunkt anzeigt. Wird eine Abweichung von der Sollroute festgestellt, so wird die jeweilige Alternativroute der Anzeige zugrundegelegt. Durch das erfindungsgemäße Verfahren kann dieses in kürzester Zeit erfolgen, ohne daß ein Verbindungsaufbau zur zentralen Einheit 11 und eine zeitraubende Berechnung der Alternativroute erforderlich sind.

## Patentansprüche

1. Verfahren zur Zielführung eines Fahrzeuges, wobei mittels einer gespeicherten Straßenkarte eine über Wegleitpunkte führende Route zu einem Ziel ermittelt wird, die als Sollroute dem Führer des Fahrzeuges durch Wegleitinformationen vorgegeben wird, **dadurch gekennzeichnet, dass** während der Fahrt des Fahrzeuges vorrausschauend für Wegleitpunkte zu dem Ziel führende Alternativrouten ermittelt und gespeichert werden, dass geprüft wird, ob das Fahrzeug von der jeweiligen Sollroute abweicht, und dass bei Feststellung einer Abweichung eine der gespeicherten Alternativrouten als neue Sollroute dem Führer durch Wegleitinformationen angezeigt wird.

2. Verfahren nach Anspruch 1, **dadurch gekennzeichnet, daß** für diejenigen Wegleitpunkte Alternativrouten ermittelt werden, bei welchen aufgrund der jeweiligen örtlichen Gegebenheiten die Wahrscheinlichkeit einer Abweichung von der Sollroute ein vorgegebenes Maß überschreitet.

3. Verfahren nach Anspruch 2, **dadurch gekennzeichnet, daß** in der gespeicherten Straßenkarte zu den Wegleitpunkten Angaben zu Fahrtwiderständen beim Passieren des jeweiligen Wegleitpunktes auf verschiedenen Straßen enthalten sind.

4. Verfahren nach einem der vorhergehenden Ansprüche, **dadurch gekennzeichnet, daß** ermittelte Alternativrouten für Wegleitpunkte, die ohne Abweichung von der Sollroute passiert werden, gelöscht werden.

5. Einrichtung zur Durchführung des Verfahrens nach einem der vorhergehenden Ansprüche, **dadurch gekennzeichnet, dass** die Straßenkarte in einer im Fahrzeug befindlichen Einrichtung gespeichert ist, dass in der im Fahrzeug befindlichen Einrichtung die Routenermittlung dadurch erfolgt, dass mittels der gespeicherten Straßenkarte eine über Wegleitpunkte führende Route zu einem Ziel ermittelbar ist, dass die Sollroute dem Führer des Fahrzeuges durch Wegleitinformationen vorgebbar ist, dass während der Fahrt des Fahrzeuges vorrausschauend für Wegleitpunkte zu dem Ziel führende Alternativrouten ermittelbar und speicherbar sind, dass prüfbar ist, ob das Fahrzeug von der jeweiligen Sollroute abweicht, und dass bei Feststellung einer Abweichung eine der gespeicherten Alternativrouten als neue Sollroute dem Führer durch Wegleitinformationen anzeigbar ist.

6. Einrichtung zur Durchführung des Verfahrens nach einem der Ansprüche 1 bis 4, **dadurch gekennzeichnet, dass** die Straßenkarte (15) in einer ortsfesten Einrichtung (11) gespeichert ist, dass in der ortsfesten Einrichtung (11) auch die Routenermittlung erfolgt und dass zwischen dem Fahrzeug und der ortsfesten Einrichtung eine Funkverbindung (12, 13) zur bidirektionalen Datenübertragung besteht, dass in der ortsfesten Einrichtung (11) mittels der gespeicherten Straßenkarte eine über Wegleitpunkte führende Route zu einem Ziel ermittelbar ist, dass die als Sollroute dem Führer des Fahrzeuges durch Wegleitinformationen vorgebbar ist, dass während der Fahrt des Fahrzeuges vorrausschauend für Wegleitpunkte zu dem Ziel führende Alternativrouten ermittelbar sind und an das Fahrzeug (10) übertragbar und in einem Speicher (20) speicherbar sind, dass prüfbar ist, ob das Fahrzeug von der jeweiligen Sollroute abweicht, und dass bei Feststellung einer Abweichung eine der gespeicherten Alternativrouten als neue Sollroute dem Führer durch Wegleitinformationen anzeigbar ist.

## Claims

1. Vehicle navigation method, a route which leads to a destination via route reference points being determined by means of a stored map and said route being indicated to the driver of a vehicle as a specified route by means of route reference information, **characterized in that**, while the vehicle is travelling, alternative routes leading to the destination are determined predictively for route reference points and are stored, **in that** it is tested whether the vehicle deviates from the respective specified route, and **in that** when a deviation is detected one of the stored alternative routes is indicated to the driver as a new specified route by means of route reference information.

2. Method according to Claim 1, **characterized in that** alternative routes are determined for those route reference points at which the probability of a deviation from the specified route exceeds a predefined degree owing to the respective local conditions.

3. Method according to Claim 2, **characterized in that** the stored map relating to the route reference points contains information on road resistances when the respective route reference point is passed on different roads.

4. Method according to one of the preceding claims, **characterized in that** alternative routes which are determined for route reference points which are passed without deviation from the specified route are deleted.

5. Device for carrying out the method according to one of the preceding claims, **characterized in that** the map is stored in a device which is located in the vehicle, **in that** the route determining process is carried out in the device located in the vehicle by virtue of the fact that a route leading to a destination via route reference points can be determined by means of the stored map, **in that** the specified route can be indicated to the driver of the vehicle by means of route reference information, **in that**, while the vehicle is travelling, alternative routes leading to the destination can be determined predictively for route reference points and stored, **in that** it is possible to test whether the vehicle deviates from the respective specified route, and **in that**, when a deviation is detected, one of the stored alternative routes can be indicated to the driver as a new specified route by means of route reference information.

6. Device for carrying out the method according to one of Claims 1 to 4, **characterized in that** the map (15) is stored in a fixed device (11), **in that** the route determining process is also carried out in the fixed device (11), and **in that** there is a radio link (12, 13) for bi-directional data transmission between the vehicle and the fixed device, **in that** a route which leads to a destination via route reference points can be determined in the fixed device (11) by means of the stored map, **in that** it can be indicated to the driver of the vehicle as a specified route by means of route reference information, **in that**, while the vehicle is travelling, alternative routes leading to the destination can be determined predictively for route reference points and transmitted to the vehicle (10) and stored in a memory (20), **in that** it is possible to test whether the vehicle deviates from the respective specified route, and **in that**, when a deviation is detected, one of the stored alternative routes can be indicated to the driver as a new specified route by means of route reference information.

## Revendications

1. Procédé de guidage d'un véhicule, avec lequel une route vers une destination passant par des points de cheminement est déterminée à l'aide d'une carte routière mémorisée, laquelle est indiquée au conducteur du véhicule par des informations de cheminement sous la forme d'une route à suivre, **caractérisé en ce que** des routes alternatives pour des points de cheminement vers la destination sont calculées et mémorisées par anticipation pendant le déplacement du véhicule, qu'un contrôle est effectué pour vérifier si le véhicule s'écarte de la route à suivre et qu'en cas de déviation l'une des routes alternatives est présentée au conducteur comme nouvelle route à suivre par des informations de guidage.

2. Procédé selon la revendication 1, **caractérisé en ce que** des routes alternatives sont déterminées pour chacun des points de cheminement pour lesquels la probabilité de s'écarter de la route à suivre dépasse un certain seuil en raison des conditions locales.

3. Procédé selon la revendication 2, **caractérisé en ce que** la carte routière mémorisée contient des indications sur les points de cheminement à propos des obstacles au déplacement rencontrés en passant par les points de cheminement correspondants sur les différentes routes.

4. Procédé selon l'une des revendications précédentes, **caractérisé en ce que** les routes alternatives déterminées pour les points de cheminement qui sont franchis sans s'écarter de la route à suivre sont effacées.

5. Appareil pour réaliser le procédé selon l'une des revendications précédentes, **caractérisé en ce que** la carte routière est mémorisée dans un appareil installé dans un véhicule, que la détermination de la route dans l'appareil installé dans le véhicule s'effectue **en ce qu'**une route passant par des points de cheminement vers une destination peut être déterminée au moyen de la carte routière, que la route à suivre peut être indiquée au conducteur du véhicule par des informations de cheminement, que des routes alternatives vers la destination peuvent être déterminées et mémorisées par anticipation pendant le déplacement du véhicule pour des points de cheminement vers la destination, qu'il est possible de contrôler si le véhicule s'écarte de la route à suivre correspondante et que si une déviation est constatée l'une des routes alternatives mémorisées peut être affichée au conducteur par des informations de cheminement comme nouvelle route à suivre.

6. Appareil pour réaliser le procédé selon l'une des revendications 1 à 4, **caractérisé en ce que** la carte routière (15) est mémorisée dans un appareil fixe (11), que la détermination de la route s'effectue également dans l'appareil fixe (11) et qu'il existe entre le véhicule et l'appareil fixe une liaison radioélectrique (12, 13) pour la transmission bidirectionnelle de données, qu'une route passant par des points de cheminement vers une destination peut être déterminée dans l'appareil fixe (11) au moyen de la carte routière mémorisée, que la route à suivre peut être indiquée au conducteur du véhicule par des informations de cheminement, que des routes alternatives vers la destination peuvent être déterminées par anticipation pendant le déplacement du véhicule pour des points de cheminement vers la destination et peuvent être transmises au véhicule (10) et mémorisées dans une mémoire (20), qu'il est possible de contrôler si le véhicule s'écarte de la route à suivre correspondante et que si une déviation est constatée l'une des routes alternatives mémorisées peut être affichée au conducteur par des informations de cheminement comme nouvelle route à suivre.
